# EUROPEAN PATENT APPLICATION

(11) **EP 1 145 821 A2**
(43) Date of publication of application: **17.10.2001**
(21) Application number: 01108836.6
(22) Date of filing: 09.04.2001
(51) Int. Cl.: B29C 51/00, A45C 3/00, A45C 5/00, A43B 1/00, B29L 22/00, B29L 31/50, B29L 9/00

(54) **Profiled body with a curved surface on which images are reproduced and a method for its preparation**

(30) Priority: 12.04.2000 IT MI000804
(71) Applicant: Preformati B.M.C. S.R.L., 24040 Filago(Bergamo) (IT)
(72) Inventor: Locatelli, Luciano, 24040 Filago (Bergamo) (IT)
(74) Representative: Frignoli, Luigi

(57) **Abstract**

A profiled body (4) having a curved surface on which images (3) are reproduced, the body being obtained by initially bonding a sheet of textile (2) material onto a surface of a flat panel (1) of thermodeformable material, then printing the images onto the flat free surface of the sheet of textile (2) material and finally hot-deforming the panel (1) with the printed sheet bonded to it, the images (3) reproduced on the curved surface preserving an appearance analogous to that which they had after their printing on the flat sheet.

## Description

The present invention relates to a profiled body with a curved surface on which images are reproduced, and a method for preparing such a body.

Profiled bodies with concave or convex curved surfaces can be obtained by hot-shaping panels deformable under hot conditions; these profiled bodies can be for example used to form rigid or semi-rigid hollow containers or articles such as rucksacks, handbags, suitcases, shoes, corsets and the like.

Hot-shapeable deformable panels can be prepared from thermoplastic materials (with components of the same type or with mixtures of thermplastic materials of different types), from rubber for engineering applications, or from other materials suitable for the purpose: for example, crosslinked or non-crosslinked closed or open cell expanded polyethylene of high or low density (depending on whether the profiled body is to be rigid or soft), ethylvinylacetate or the like can be used.

The aforesaid profiled bodies sometimes have their exposed surface decorated by transfer printing or by applying to it a flexible sheet of fabric or of plastic material or of paper of different colours or with images reproducing fancy objects such as stars, flowers, insects, etc.

Applying a decorative sheet to a concave or convex surface of a profiled body presents problems which can be solved satisfactorily only by bonding (by an adhesive, by heat or under pressure) the aforesaid flexible sheet to the surface of a flat panel and then hot- deforming the composite panel obtained in this manner to cause it to assume the desired shape. If the sheet of decorative material is of uniform homogeneous structure or has fancy designs or images, a decorated profiled body is obtained of acceptable appearance.

If however the images (this term embracing all possible types of decoration) are complex or of relatively large dimensions or comprise substantially parallel lines or curves, these images are deformed along those regions of maximum curvature (convexity or concavity): for example, if the decoration comprises parallel lines, these lines assume a curved path of increasing distance apart as the curvature of the profiled body surface increases.

In this case the images reproduced on the flexible decorated sheet fixed to the surface of the thermally deformable support panel are unacceptable from the appearance aspect, with the result that this type of decoration is not used in practice.

Images reproduced on the exposed surface of the deformable sheet can be printed on it in any known manner, for example by thermally transferring the images from a support sheet, by transfer printing, by a mechanical printing system or the like.

It has been surprisingly found that profiled bodies with curved surfaces presenting reproduced images having a very good outer appearance (in that the images are very little deformed compared with those reproduced on flat surfaces) can be obtained by firstly bonding a flexible sheet onto the surface of a flat panel of thermodeformable material, then printing the desired images onto the flat free surface of this sheet and finally hot-deforming the printed composite panel to cause it to assume the desired curved shape, with the images situated on the said curved surface substantially preserving the appearance they had after being printed on the flat sheet.

The present invention and its characteristics will be more apparent from the ensuing description of one embodiment thereof given by way of nonlimiting example with reference to the accompanying drawing, in which:
Figure 1 is a schematic perspective view of a panel and a sheet spaced apart;
Figure 2 is a perspective view of the panel and sheet of Figure 1, but superposed;
Figure 3 is similar to Figure 2, but with the difference that images have been printed on the free surface of the sheet; and
Figure 4 represents a profiled body with curved surfaces, obtained by deforming the panel with the printed sheet of Figure 3.

It will be assumed that a profiled body is to be obtained having the shape of a hollow convex shell usable to form the external part of a rucksack or a rigid or semi-rigid handbag.

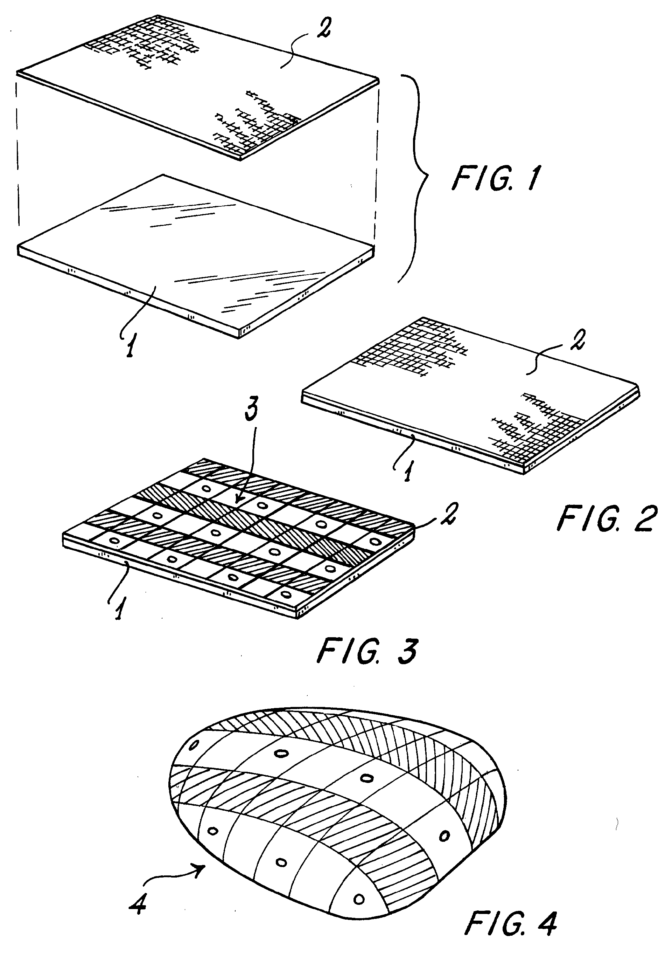

For this purpose a panel 1 (to form the resistant part of the body) and a flexible sheet 2 are used, these being shown schematically in Figure 1 positioned spaced apart one above the other.

The panel 1 can be of any thermodeformable material, such as rubbers for engineering use or thermoplastic materials (possibly mixtures of different thermoplastic materials), in particular crosslinked or non- crosslinked closed or open cell expanded polyethylene of high or low density, ethylvinylacetate or the like.

In the specific example shown herein, the panel 1 can have a thickness of 5 or 6 mm and can be formed of crosslinked expanded polyethylene with a density of 80 kg/m³.

The flexible sheet 2 can be formed from a layer of woven or non-woven textile material (of natural or synthetic fibres, or other), or from a film of plastic material, or from a sheet of paper or the like; it is essential that at least that surface of the sheet 2 which is to remain exposed be printable, i.e. that images can be reproduced on it by directly printing the images on said surface or by hot-transferring the images from sheets having the images already previously reproduced on them (these transfer sheets are well known and will not be described for simplicity), or by transfer printing or the like. The term "image" means any geometrical or fancy or written representation or the reproduction of figures of any kind.

In the illustrated example, the sheet can consist of a bielastic white or non-white polyester fabric, of the type known as "ready for printing", i.e. such that the aforesaid images can be printed on its surface.

The sheet 2 is rested on the flat panel 1 and is bonded to it (i.e. is securely fixed onto it), either continuously or discontinuously, by an adhesive or by heating and softening the panel surface and pressing the sheet 2 onto it: preferably, in the illustrated example, the sheet and the panel are bonded together by previously heating the panel surface with a flame or by pressing the sheet onto the panel in a press heated to a temperature between about 30°C and about 200°C, depending on the residence time in the press.

In this manner the flat composite panel shown in Figure 2 in obtained, in which the fabric sheet is strongly and uniformly anchored to the panel surface.

The desired images, which in the example shown in Figure 3 are assumed to consist of a first succession of parallel lines intersected by a second succession of lines perpendicular to the first, are then printed (by any known method, for example by hot transfer from a pre- printed support) on the flat free surface of the fabric sheet.

The flat composite panel with the images already printed on the free surface of the fabric is then passed into an oven or into a preheated press, where it remains exposed to a temperature (for example between 170°C and 200°C) for a time sufficient to cause softening or plastic deformability of the panel or support 1: the heated composite panel is then immediately placed in a press having profiled plates, which compress and deform the panel to make it assume the form of the profiled body 4 (Figure 4) which is to be obtained. After a short cooling period (for example from 2 to 5 minutes) the profiled body can be removed from the press and can be directly used as a component of rucksacks, suitcases, shoes, handbags or the like.

What has been surprisingly noted is that by proceeding in the described manner, the images reproduced on the profiled curved surfaces maintain practically unaltered the appearance they had after being printed on the flat surfaces of the fabric sheet: this is easily seen from Figure 4 where it can be seen that the various lines which were parallel or perpendicular to each other in Figure 3 remain practically parallel or perpendicular even in the curved regions of the profiled body, without undergoing visible deformations which would have occurred if the images had already been printed on the fabric sheet before fixing it to the surface of the thermodeformable panel 1.

## Claims

1. A profiled body having an at least partially curved surface on which images are reproduced, **characterized by** comprising a support panel of thermodeformable material and a sheet of flexible material adheringly fixed at least onto a partially curved surface of said panel, on the free surface of said sheet there being printed images the appearance of which is substantially equal to that which they would have if the images had been printed on a flat sheet.

2. A body as claimed in claim 1, **characterized in that** said deformable material is chosen from the group consisting of thermoplastic materials and rubber, either in the pure state or in mixture, or with the addition of additives of known type for making them workable and shapeable.

3. A body as claimed in claims 1 and 2, **characterized in that** said sheet of flexible material is chosen from the group consisting of woven or non-woven textile materials, films of plastic material and paper.

4. A container or the like incorporating a profiled body in accordance with claims from 1 to 3.

5. A method for preparing a profiled body having a curved profiled surface printed with images, **characterized by** fixing onto the surface of a substantially flat panel of thermodeformable material a sheet of flexible material, on the free surface of which images are then reproduced to form a composite panel which is then hot-deformed by known methods to cause it to assume a curved shape at least where said images are present.

6. A method as claimed in claim 5, **characterized in that** said sheet is fixed onto the surface of said panel by hot bonding.

7. A method as claimed in claims 5 and 6, **characterized in that** said sheet of flexible material consists of woven or non-woven textile material of a type able to receive images by directly printing the images on the free surface of the fabric.
